# EUROPÄISCHE PATENTSCHRIFT

(11) **EP 3 991 037 B1**
(45) Veröffentlichungstag und Bekanntmachung des Hinweises auf die Patenterteilung: **07.06.2023**
(21) Anmeldenummer: 21720231.6
(22) Anmeldetag: 19.04.2021
(51) Int. Cl.: G06F 9/445, G06F 9/455, G06F 8/36, G06F 21/53, B60R 16/02, G06N 20/00

(54) **STEUERGERÄT FÜR EIN FAHRZEUG, SYSTEM, VERFAHREN UND KRAFTFAHRZEUG MIT EINEM SOLCHEN STEUERGERÄT**
CONTROLLER FOR A VEHICLE, SYSTEM, METHOD, AND MOTOR VEHICLE COMPRISING SUCH A CONTROLLER
DISPOSITIF DE COMMANDE POUR UN VÉHICULE, SYSTÈME, PROCÉDÉ ET VÉHICULE À MOTEUR COMPRENANT UN TEL DISPOSITIF DE COMMANDE

(30) Priorität: 25.06.2020 DE 102020116714
(43) Veröffentlichungstag der Anmeldung: 04.05.2022
(73) Patentinhaber: Audi AG, 85045 Ingolstadt (DE)
(72) Erfinder: HANRIEDER, Sebastian, 86669 Untermaxfeld (DE); HASELBECK, Florian, 94405 Landau (DE); POPPINGA, Benjamin, 85139 Wettstetten (DE); SCHLITTENBAUER, Michael, 85049 Ingolstadt (DE); DUMLER, Johannes, 93349 Hiendorf (DE); SCHÖN, Torsten, 85111 Adelschlag (DE)
(86) Internationale Anmeldenummer: PCT/EP2021/060012
(87) Internationale Veröffentlichungsnummer: WO 2021/259533

(56) Entgegenhaltungen:
- US-B1- 8 413 146

## Beschreibung

Die Erfindung betrifft ein Steuergerät für ein Fahrzeug gemäß Anspruch 1. Außerdem betrifft die Erfindung ein System mit einem Steuergerät und einem fahrzeugexternen Server gemäß Anspruch 7 rensowie ein Kraftfahrzeug mit einem solchen Steuergerät gemäß Anspruch 8.

Speziell im automotive Umfeld ermöglicht der Einsatz von Künstliche-Intelligenz-Programmen (KI-Programmen), die auch als "machine learning" Programme oder Algorithmen bezeichnet werden können, Lösungen zu komplexen Aufgaben. Hierbei kann das KI-Programm mittels Daten, insbesondere Fahrzeugsensordaten, angelernt werden, wobei das KI-Programm nach dem Anlernen nachfolgende Daten automatisch klassifizieren kann und somit mittels künstlicher Intelligenz Entscheidungen treffen kann.

Der Betrieb und das Integrieren dieser KI-Programme in ein Fahrzeug ist mit einem sehr hohen Aufwand verbunden. Für eine Funktionalität eines solchen Mechanismus sind diverse Kriterien zu erfüllt. Ein KI-Programm benötigt eine funktionsfähige abgeschlossene Umgebung, welche ihm die für den Betrieb benötigten Fahrzeug-/Sensordaten, einen Speicherplatz für Modelparameter, sowie passende Programmbibliotheken, das heißt Softwarebibliotheken, zur Verfügung stellt. Vorzugsweise soll auch eine Ausführung des KI-Programms überwacht werden, um das KI-Programm gegebenenfalls neu zu starten. Aus der US 2020/0097851 A1 ist ein gattungsgemäßes Verfahren und System zum Ausführen von maschinellen Lernverfahren bekannt. Eine computerbasierte Plattform dient zur Speicherung, Katalogisierung und Ausführung der maschinellen Lernverfahren, wobei binarische Definitionen und Metadaten von Modellen in einer Ablage gespeichert sind.

Aus der US 2019/0205667 A1 sind ein Verfahren, eine Vorrichtung und ein System für maschinelles Lernen zur Erzeugung synthetischer Bilddaten bekannt.

Aus der US 2019/0188800 A1 ist eine Rechenplattform zur Steuerung autonomer Fahrzeuge zur Optimierung von Verkehrscharakteristiken bekannt.

Aus der US8413146 B1 ist ein Hypervisor-unterstützer geteilter Zugriff mehrerer virtueller Maschinen auf eine einzige große, auf Hypervisor-Level gespeicherte Dateninstanz über spezielle Dateisystemtreiber in jeder der virtuellen Maschinen bekannt.

Nachteilig bei bisher bekannten Verfahren ist es, dass durch eine fehlende Vereinheitlichung bei einer Integration von KI-Programmen in ein Fahrzeug Synergien nicht vollständig und nachhaltig genutzt werden können. In der Folge können redundante Tätigkeiten bei dem Betrieb und der Integration dieser Programme entstehen. Softwarebibliotheken werden teilweise mehrfach integriert, da diese jeweils nur für einen Algorithmus eines KI-Programms verfügbar sind. Ferner werden Daten mehrfach verschickt, da diese ebenfalls nur für jeweils einen Algorithmus eines KI-Programms bereitgestellt werden.

Die Aufgabe der vorliegenden Erfindung ist es, ein Steuergerät für eine verbesserte Anwendung von KI-Programmen für ein Fahrzeug bereitzustellen.

Diese Aufgabe wird durch die unabhängigen Patentansprüche gelöst. Vorteilhafte Weiterbildungen der Erfindung sind durch die abhängigen Patentansprüche, die folgende Beschreibung sowie die Figuren offenbart.

Der Erfindungsgedanke ist es, auf einem Steuergerät eine Rechenplattform für ein Künstliche-Intelligenz-Programm beziehungsweise Maschine Learning Algorithmen zu erzeugen, in der zumindest ein KI-Programm, bevorzugt mehrere KI-Programme, in eine jeweils angepassten virtuellen Umgebung oder virtuellen Maschine betrieben werden, wobei eine Programm- oder Softwarebibliothek, die alle KI-Programme nutzen, nicht einzeln in den virtuellen Umgebungen installiert ist, sondern für alle zentral von außerhalb der virtuellen Umgebungen bereitgestellt wird, sodass nur eine Kopie oder Instanz dieser Programm- oder Softwarebibliothek in den Steuergerät gespeichert und/oder gewartet werden muss.

Durch die Erfindung ist ein Steuergerät für ein Fahrzeug gemäß Anspruch 1 bereitgestellt.

Die Recheneinrichtung kann eine Datenverarbeitungseinrichtung sein, die einen Prozessor, einen Arbeitsspeicher und einen nicht-flüchtigen Speicher umfasst. Die Rechenplattform kann eine Schicht oder Ebene der Recheneinrichtung sein, die insbesondere als Hardwareplattform oder Softwareplattform ausgebildet ist.

Mit anderen Worten kann eine Recheneinrichtung des Steuergeräts eine Rechenplattform für künstliche Intelligenz aufweisen, die insbesondere als eine Anwendungsebene gemäß OSI-Modell ausgebildet sein kann. Die Rechenplattform kann zudem mehrere Softwaremodule aufweisen, insbesondere eine Bibliotheksverwaltungseinheit ("library handler") und eine Datenverwaltungseinheit ("data handler"), die einen Betrieb eines KI-Programms verwalten. Ein KI-Programm kann ein Computerprogramm sein, das mittels künstlicher Intelligenz Daten, vorzugsweise Fahrzeugsensordaten, analysieren kann, wobei hierfür ein maschineller Lernalgorithmus (machine learning algorithm) mittels vorgegebener Fahrzeugsensordaten angelernt werden kann. Die angelernten Modellparameter beziehungsweise Muster können beispielsweise in Form von Gewichtungsdaten gespeichert werden. Mittels des angelernten KI-Programms können dann Fahrzeugsensordaten klassifiziert werden, um automatisch Entscheidungen treffen zu können, beispielsweise für autonomes Fahren.

Die Rechenplattform kann für das zumindest eine KI-Programm eine Laufzeitumgebung erzeugen, wobei die Laufzeitumgebung als abgegrenzte Laufzeitumgebung erzeugt wird. Das bedeutet, dass eine virtuelle Maschine beziehungsweise eine virtuelle Umgebung erzeugt wird, in der das KI-Programm abgegrenzt von einer Laufzeitumgebung der Rechenplattform, die beispielsweise ein Betriebssystem der Recheneinrichtung sein kann, bereitgestellt wird. Diese abgegrenzte Laufzeitumgebung der virtuellen Maschine kann vorzugsweise speziell auf die Bedürfnisse des KI-Programms angepasst sein. Beispielsweise können Rechenressourcen, Umgebungsvariablen oder ein Betriebssystem der abgegrenzten Laufzeitumgebung auf das KI-Programm abgestimmt sein.

Die Bibliotheksverwaltungseinheit der Rechenplattform kann vorzugsweise Programmbibliotheken für KI-Programme zentral verwalten, insbesondere eine für das KI-Programm vorgegebenen Programmbibliothek, wobei die Programmbibliotheken auf einem Speicher der Recheneinrichtung, außerhalb der virtuellen Maschine gespeichert sein können. Die Bibliotheksverwaltungseinheit kann dazu ausgebildet sein, die für das KI-Programm vorgegebene Programmbibliothek in die abgegrenzte Laufzeitumgebung der virtuellen Maschine einzubinden. Beispielsweise kann die Bibliotheksverwaltungseinheit eine virtuelle Verbindung aus der abgegrenzten Laufzeitumgebung auf einen Speicherort der vorgegebenen Programmbibliothek herstellen, indem ein Speicherort der Programmbibliothek in ein Dateisystem der virtuellen Maschine eingebunden ("gemounted") wird, wobei die Programmbibliothek als geteilte Programmbibliothek ("shared library") vorgesehen sein kann, die dynamisch mit dem KI-Programm verbunden werden kann, insbesondere mit einem dynamischen Verbinder ("dynamic linker") der Rechenplattform.

Somit kann die vorgegebene Programmbibliothek von außerhalb der virtuellen Maschine bereitgestellt werden, wodurch sich der Vorteil ergibt, dass die Programmbibliothek nicht in der virtuellen Maschine gespeichert sein muss. Insbesondere bei mehreren virtuellen Maschinen, die ein jeweiliges KI-Programm betreiben, ist dies von Vorteil, da KI-Programme oftmals gleiche Programmbibliotheken verwenden und somit die Programmbibliothek nicht redundanten vorgesehen sein muss, was Speicherplatz spart. Außerdem kann somit eine Aktualisierung einer Programmbibliothek und folglich des KI-Programms zentral stattfinden, was einen Betrieb und eine Wartung von KI-Programmen erleichtert. Alternativ oder zusätzlich kann die vorgegebene Programmbibliothek auch an mehreren Speicherorten außerhalb der einen oder mehreren virtuellen Maschinen gespeichert sein, wobei die Bibliotheksverwaltungseinheit das Einbinden des jeweiligen Speicherorts in die virtuelle Maschine verwalten kann.

Die Datenverwaltungseinheit der Rechenplattform kann ein zentrales Datenübertragungsmanagementsystem der Rechenplattform sein, das eine Kommunikation zwischen Softwaremodulen der Rechenplattform, dem Fahrzeugbus und der virtuellen Maschine steuern kann. Die Datenverwaltungseinheit kann vorzugsweise bestimmen, auf welche Fahrzeugsensordaten das KI-Programm zugreifen kann. Hierdurch kann die virtuelle Maschine und somit letztendlich das KI-Programm nur auf die für sie freigegebenen Fahrzeugsensordaten zugreifen. Hierzu kann die Datenverwaltungseinheit beispielsweise eine Berechtigung des KI-Programms und/oder der virtuellen Maschine abfragen und nur Fahrzeugsensordaten über eine virtuelle Verbindung in die abgegrenzte Laufzeitumgebung übertragen, für die die Berechtigung vorliegt. Insbesondere kann die Datenverwaltungseinheit die Berechtigung zur Kommunikation mit den Fahrzeugsensordaten an das KI-Programm und/oder die virtuelle Maschine verteilen. Vorzugsweise kann die Datenverwaltungseinheit die Rechte an mehrere virtuelle Maschinen individuell verteilen.

Durch die Erfindung ergibt sich der Vorteil, dass KI-Programme komfortabler in ein Fahrzeug integriert werden können. Hierbei kann durch die Plattformarchitektur zum Beispiel in Bezug auf die Bereitstellung von Softwarebibliotheken Speicherplatz gespart und durch die Erstellung von virtuellen Maschinen eine Systemsicherheit erhöht werden. Redundante Tätigkeiten können reduziert werden, indem Synergien genutzt werden.

Zu der Erfindung gehören auch Ausführungsformen, durch die sich zusätzliche Vorteile ergeben.

Eine Ausführungsform sieht vor, dass die Rechenplattform einen Hypervisor aufweist und die abgegrenzte Laufzeitumgebung virtualisiert innerhalb der Recheneinrichtung als virtuelle Maschine nur indirekt über den Hypervisor der Rechenplattform, insbesondere über die Bibliotheksverwaltungseinheit und die Datenverwaltungseinheit, mit einer Hardwareumgebung der Recheneinrichtung gekoppelt ist. Mit anderen Worten ist die Rechenplattform eine abstrahierende Schicht zwischen zumindest der abgegrenzten Laufzeitumgebung und der Hardwareumgebung der Recheneinrichtung. Das heißt, dass die abgegrenzte Laufzeitumgebung keinen eigenständigen Zugriff auf die Recheneinrichtung und somit die Fahrzeugsensordaten vom Bus aufweist. Der Hypervisor der Rechenplattform kann vorzugsweise die Rechenressourcen der Recheneinrichtung und die Daten, insbesondere die Fahrzeugsensordaten, der jeweiligen abgegrenzten Laufzeitumgebung zuweisen, wobei insbesondere durch den Hypervisor mehrere abgegrenzte Laufzeitumgebungen unabhängig voneinander bereitgestellt sein können. Für die Zuweisung der Fahrzeugsensordaten kann der Hypervisor vorzugsweise von der Datenverwaltungseinheit die Information bekommen, welche Fahrzeugsensordaten für welches KI-Programm freigegeben sind. Mit anderen Worten kann der Hypervisor von der Datenverwaltungseinheit die "Erlaubnis" einholen, dass die Fahrzeugsensordaten der abgegrenzte Laufzeitumgebung bereitgestellt werden können. In ähnlicher Weise kann der Hypervisor mit der Bibliotheksverwaltungseinheit interagieren und die vorgegebene Programmbibliothek nach Abstimmung mit der Bibliotheksverwaltungseinheit dem KI-Programm in der abgegrenzten Laufzeitumgebung von außerhalb der abgegrenzten Laufzeitumgebung bereitstellen. Vorzugsweise können der Hypervisor, die Bibliotheksverwaltungseinheit und die Datenverwaltungseinheit in einer gleichen Laufzeitumgebung, das heißt auf einer Ebene, vorgesehen sein, der Hypervisor kann jedoch auch eine eigene virtuelle Maschine für die Bibliotheksverwaltungseinheit und/oder die Datenverwaltungseinheit bereitstellen. Der Hypervisor kann als Typ 1 Hypervisor oder Typ 2 Hypervisor ausgebildet sein und somit entweder direkt auf der Hardware der Recheneinrichtung aufsitzen oder auf einem Betriebssystem der Recheneinrichtung laufen und somit als Hostsystem der virtuellen Maschine fungieren. Durch diese Ausführungsform ergibt sich der Vorteil, dass die abgegrenzte Laufzeitumgebung, insbesondere das KI-Programm, keinen direkten Zugriff auf die Hardwareumgebung aufweist, wodurch eine Sicherheit des Steuergeräts erhöht werden kann. Es können beispielsweise auch KI-Programme von Dritten angewendet werden, ohne eine Sicherheit zu gefährden.

Die in den unabhängigen Ansprüchen definierte Erfindung sieht vor, dass durch die Rechenplattform mehrere abgegrenzte Laufzeitumgebungen mit einem jeweiligen KI-Programm bereitgestellt sind, wobei die Bibliotheksverwaltungseinheit dazu ausgebildet ist, die vorgegebene Programmbibliothek an die mehreren abgegrenzten Laufzeitumgebungen mittels geteilten Zugriff bereitzustellen. Mit anderen Worten wird zumindest die vorgegebene Programmbibliothek zentral für alle abgegrenzten Laufzeitumgebungen von mehreren virtuellen Maschinen für das jeweilige KI-Programm bereitgestellt. Somit kann die vorgegebene Programmbibliothek nicht redundant in jeder virtuellen Maschine vorgesehen sein, sondern es kann Speicherplatz gespart werden und es können Synergien zwischen unterschiedlichen KI-Programmen genutzt werden. Viele KI-Programme benötigen ähnliche oder gleiche Programmbibliotheken, wobei durch diese Ausführungsform redundante Tätigkeiten reduziert werden können, da beispielsweise bei einer Aktualisierung der Programmbibliothek nicht in jeder virtuellen Maschine die Programmbibliothek aktualisiert werden muss, sondern es kann einmalig für alle KI-Programme die Programmbibliothek zentral aktualisiert werden. Mit geteiltem Zugriff ist gemeint, dass die Bibliotheksverwaltungseinheit eine virtuelle Verbindung von jeder abgegrenzten Laufzeitumgebung zu dem Speicherort der vorgegebenen Programmbibliothek herstellen kann und diese Programmbibliothek mittels eines dynamischen Verbinders in das KI-Programm einbinden kann.

Die in den unabhängigen Ansprüchen definierte Erfindung sieht vor, dass die Datenverwaltungseinheit ferner dazu ausgebildet ist, Ergebnisdaten der Klassifikation von dem jeweiligen KI-Programm aus der jeweiligen abgegrenzten Laufzeitumgebung zu erhalten und diese zur Ansteuerung einer Fahrzeugfunktion bereitzustellen. Eine weitere Ausführungsform sieht vor, dass die Datenverwaltungseinheit ferner dazu ausgebildet ist, Ergebnisdaten der Klassifikation von dem jeweiligen KI-Programm aus der jeweiligen abgegrenzten Laufzeitumgebung zu erhalten und diese einem weiteren KI-Programm in einer weiteren abgegrenzten Laufzeitumgebung bereitzustellen.

Das KI-Programm, das als machine learning Algorithmus ausgebildet sein kann, kann beispielsweise beim maschinellen Lernen Gewichtungsdaten erzeugen, die beispielsweise angelernte Entscheidungen des KI-Programms repräsentieren können. Mittels dieser Gewichtungsdaten kann das KI-Programm dann weitere Daten, insbesondere Fahrzeugsensordaten, klassifizieren, um Ergebnisdaten zu erhalten.

Erfindungsgemäß umfassen die Ergebnisdaten Steuerbefehle für eine Fahrzeugfunktion.

Die Gewichtungsdaten und/oder Ergebnisdaten können von der Datenverwaltungseinheit weitergeleitet werden, beispielsweise als Eingang in ein weiteres KI-Programm einer weiteren abgegrenzten Laufzeitumgebung und/oder die Ergebnisdaten können von der Datenverwaltungseinheit auf einen Bus des Steuergeräts gelegt werden, um beispielsweise als Eingangsdaten für eine Funktion des Fahrzeugs zu dienen. Durch diese Ausführungsform ergibt sich der Vorteil, dass die Daten nicht direkt von dem KI-Programm an ein weiteres KI-Programm oder zum Ansteuern einer Fahrzeugfunktion verwendet werden kann, sondern die Bereitstellung und Weiterleitung über die Datenverwaltungseinheit läuft. Hierdurch kann eine Kontrolle über die Fahrzeugsensordaten von der Rechenplattform erhalten werden, wodurch sich eine Sicherheit für das Steuergerät erhöht.

Eine weitere Ausführungsform sieht vor, dass die Rechenplattform eine Hardwareabstraktionsschicht aufweist, die dazu ausgebildet ist, die Rechenplattform an eine Hardware der Recheneinrichtung des Steuergeräts anzupassen. Mit anderen Worten kann die Hardwareabstraktionsschicht die Rechenplattform, insbesondere ein Betriebssystem der Rechenplattform, von der Hardware der Recheneinrichtung isolieren. Vorzugsweise kann nur die Hardwareabstraktionsschicht auf die Hardware des Steuergeräts zugreifen und Software der Recheneinrichtung, insbesondere die Rechenplattform, kann nur unter Vermittlung der Hardwareabstraktionsschicht mit der Hardware des Steuergeräts kommunizieren. Durch diese Abstraktion wird es erleichtert, die Rechenplattform auf unterschiedliche Prozessorarchitekturen der Recheneinrichtung anzupassen, da nur die Hardwareabstraktionsschicht geändert werden muss. Somit ergibt sich der Vorteil, dass die Rechenplattform flexibel auf eine Recheneinrichtung oder ein Steuergerät angepasst werden kann, da die Hardwareabstraktionsschicht entsprechend angepasst werden muss.

Eine weitere Ausführungsform sieht vor, dass die Rechenplattform eine Problemerkennungseinheit aufweist, die dazu ausgebildet ist, die Klassifizierung der Fahrzeugsensordaten durch das KI-Programm auf Vorliegen einer vorgegebenen Klassifizierungsbedingung zu überprüfen und die Fahrzeugsensordaten, für die die Klassifizierungsbedingung vorliegt, in einem Problemdatenspeicher zu speichern. Mit anderen Worten kann die Problemerkennungseinheit problematische Fahrzeugsensordaten, die von dem KI-Programm nicht oder mit einer sehr geringen Wahrscheinlichkeit eingeordnet werden, aussortieren und in einem Problemdatenspeicher speichern, um diese Fahrzeugsensordaten später für eine Analyse oder ein Nachtrainieren bereitstellen zu können. Die Problemerkennungseinheit kann ein Softwaremodul der Rechenplattform sein. Die Klassifizierungsbedingung kann beispielsweise ein vorgegebener Schwellenwert sein, der eine Güte der Erkennung durch das KI-Programm angeben kann. Beispielsweise kann die Klassifizierungsbedingung sein, dass die Klassifizierung der Fahrzeugsensordaten mit einer Sicherheit von über 80 Prozent stattfinden soll. Werden Fahrzeugsensordaten unterhalb dieser Klassifizierungsbedingung festgestellt, so können diese Fahrzeugsensordaten durch die Problemerkennungseinheit aus einem Prozess ausgegliedert werden und in dem Problemdatenspeicher gespeichert werden. Alternativ oder zusätzlich kann das jeweilige KI-Programm die Klassifizierung der Fahrzeugsensordaten auf Vorliegen der Klassifizierungsbedingung überprüfen und der Problemerkennungseinheit mitteilen, falls die Klassifizierungsbedingung vorliegt, um die betreffenden Fahrzeugsensordaten in den Problemdatenspeicher zu speichern. Durch diese Ausführungsform ergibt sich der Vorteil, dass ein späteres Nachtrainieren des KI-Programms durchgeführt werden kann, wodurch sich das KI-Programm kontinuierlich verbessert und seine Prädiktionsfähigkeit steigert.

Eine weitere Ausführungsform sieht vor, dass die Rechenplattform eine Kommunikationseinheit aufweist, die dazu ausgebildet ist, eine Aktualisierung des KI-Programms und/oder ein weiteres KI-Programm, insbesondere von einem fahrzeugexternen Server, zu empfangen, und während einer Laufzeit der Recheneinrichtung und/oder der abgegrenzten Laufzeitumgebung einzubinden. Mit anderen Worten kann eine Aktualisierung oder eine Erweiterung durch ein weiteres KI-Programm durch die Kommunikationseinheit durchgeführt werden, während einer Laufzeit der Recheneinrichtung und/oder der abgegrenzten Laufzeitumgebung. Die Kommunikationseinheit kann ein Softwaremodul sein. Die Kommunikationseinheit kann ein Kommunikationsprotokoll aufweisen, das eine Datenverbindung beispielsweise über WLAN, einen Mobilfunkstandard und/oder Bluetooth aufweisen kann. Hierüber können dann die Aktualisierungs- oder Programmdaten empfangen werden. Die Anbindung während der Laufzeit kann über ein so genanntes "hot swapping" beziehungsweise "hot plugging" durchgeführt werden. Hierbei kann ein Interpreter die Aktualisierung des KI-Programms und/oder das weitere KI-Programm direkt während der Laufzeit einbinden. Durch diese Ausführungsform ergibt sich der Vorteil, dass das Steuergerät mit der Rechenplattform flexibel und schnell aktualisiert und an neue Gegebenheiten angepasst werden kann.

Ein weiterer Aspekt der Erfindung betrifft ein System mit einem Steuergerät nach einem der vorhergehenden Ausführungsbeispiele und mit einem fahrzeugexternen Server, wobei der fahrzeugexterne Server eine gespiegelte Rechenplattform aufweist, die dazu ausgebildet ist, die Fahrzeugsensordaten aus dem Problemdatenspeicher der Recheneinrichtung des Steuergeräts zu empfangen und mittels eines serverbasierten KI-Programms gemäß einem überwachten maschinellen Lernen zu analysieren und Gewichtungsdaten und/oder Ergebnisdaten der Analyse als Aktualisierung der Recheneinrichtung des Steuergeräts bereitzustellen. Mit anderen Worten ist die Rechenplattform neben dem Steuergerät auch auf einem fahrzeugexternen Server vorgesehen, der die Fahrzeugsensordaten aus dem Problemdatenspeicher der Recheneinrichtung empfangen kann, wobei der fahrzeugexterne Server dazu ausgebildet ist, die Fahrzeugsensordaten des Problemdatenspeichers mittels eines serverbasierten KI-Programms zu analysieren. Insbesondere können die Fahrzeugsensordaten aus dem Problemdatenspeicher mittels überwachten maschinellen Lernens analysiert werden und die Ergebnisdaten dieser Analyse können wieder zurück auf das Steuergerät übertragen werden. Durch diesen Aspekt der Erfindung ergibt sich der Vorteil, dass "Problemdaten" schnell und einfach klassifiziert werden können, ohne direkten Zugriff auf das Steuergerät, insbesondere auf das KI-Programm haben zu müssen.

Erfindungsgemäß ist auch ein Verfahren bereitgestellt. Das Verfahren umfasst als Schritte ein Bereitstellen einer abgegrenzten Laufzeitumgebung innerhalb einer virtuellen Maschine für zumindest ein Künstliche-Intelligenz-Programm, KI-Programm, durch eine Rechenplattform einer Recheneinrichtung, wobei das KI-Programm mittels vorgegebener Fahrzeugsensordaten maschinell angelernt wird und/oder wobei durch das KI-Programm die Fahrzeugsensordaten klassifiziert werden, ein Bereitstellen zumindest einer vorgegebenen Programmbibliothek für das KI-Programm von außerhalb der abgegrenzten Laufzeitumgebung durch eine Bibliotheksverwaltungseinheit; und ein Bereitstellen der vorgegebenen Fahrzeugsensordaten an das KI-Programm zum maschinellen Lernen und/oder Klassifizieren durch eine Datenverwaltungseinheit. Hierdurch ergeben sich die gleichen Vorteile und Variationsmöglichkeiten wie bei dem Steuergerät.

Zu der Erfindung gehören auch Weiterbildungen des erfindungsgemäßen Verfahrens, die Merkmale aufweisen, wie sie bereits im Zusammenhang mit den Weiterbildungen des erfindungsgemäßen Steuergeräts beschrieben worden sind. Aus diesem Grund sind die entsprechenden Weiterbildungen des erfindungsgemäßen Verfahrens hier nicht noch einmal beschrieben.

Ein weiterer Aspekt der Erfindung betrifft ein Kraftfahrzeug mit einem Steuergerät nach einer der vorhergehenden Ausführungsformen. Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Zu der Erfindung gehört auch die Steuervorrichtung für das Kraftfahrzeug. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Systems mit einem Steuergerät und einem fahrzeugexternen Server gemäß einer beispielhaften Ausführungsform;
- Fig. 2: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

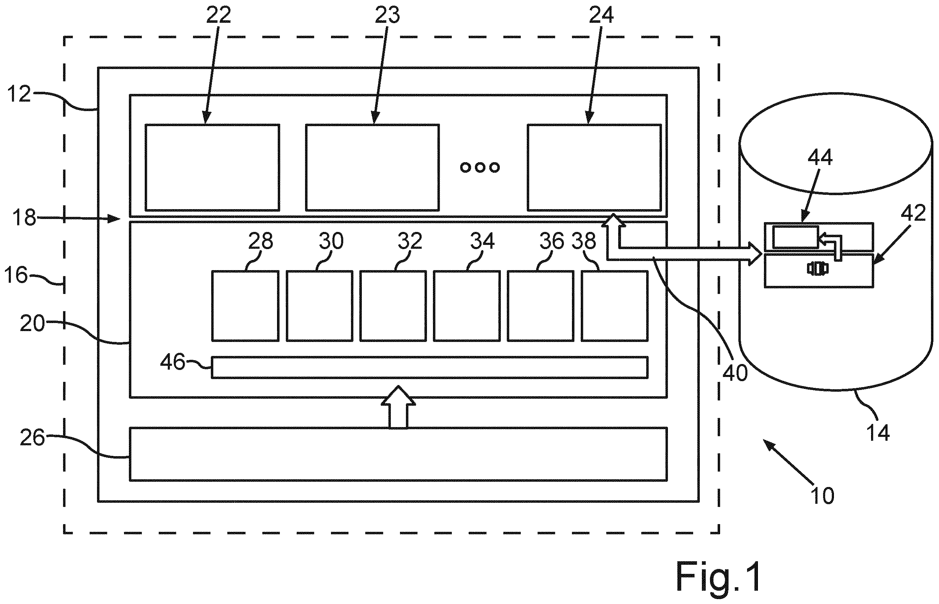

In Fig. 1 ist ein schematisches System 10 mit einem Steuergerät 12 und einem fahrzeugexternen Server 14 gemäß einer beispielhaften Ausführungsform dargestellt. Das Steuergerät 12 kann in einem Kraftfahrzeug 16 vorgesehen sein, was in dieser Fig. nur schematisch angedeutet ist.

Das Steuergerät 12 kann eine Recheneinrichtung 18 aufweisen, die dazu ausgebildet ist, eine Rechenplattform 20 für künstliche Intelligenz zu betreiben. Die Recheneinrichtung 18 kann hierfür einen oder mehrere Prozessoren, Arbeitsspeicher, einen nicht-flüchtigen Speicher und ein Betriebssystem aufweisen, die in dieser Figur nicht gezeigt sind. Die Rechenplattform kann als ein Hypervisor ausgebildet sein, der beispielsweise als Typ 2 Hypervisor in dem Betriebssystem der Recheneinrichtung 18 betrieben wird. Die Rechenplattform 20 kann dazu ausgebildet sein, eine oder mehrere virtuelle Maschinen 22, 23, 24 mit einer jeweilig abgegrenzten Laufzeitumgebung zu erzeugen, auf denen jeweils ein Künstliche-Intelligenz-Programm (KI-Programm) betrieben werden kann. Die KI-Programme der jeweiligen virtuellen Maschinen 22, 23, 24 können ausgebildet sein, mittels der Fahrzeugsensordaten, insbesondere mittels vorgegebener Fahrzeugsensordaten für das KI-Programm, maschinell zu lernen und/oder die Fahrzeugsensordaten zu klassifizieren. Ein KI-Programm kann beispielsweise ein einen Algorithmus zum maschinellen Lernen umfassen, insbesondere ein neuronales Netz, das Daten, insbesondere Fahrzeugsensordaten, analysieren kann und auf Basis der Analyse ein Muster in Daten erkennen kann. Das heißt, dass das KI-Programm Fahrzeugsensordaten auf Vorliegen eines Musters klassifizieren kann. Beispielsweise kann die virtuelle Maschine 22 ein KI-Programm zur automatischen Bilderkennung, die virtuelle Maschine 23 ein KI-Programm zur Spracherkennung und die virtuelle Maschine 24 ein KI-Programm zum autonomen Fahren betreiben.

Zum Erhalten der Fahrzeugsensordaten kann das Steuergerät 12 an einen Datenbus 26 des Kraftfahrzeugs 16 angeschlossen sein, wobei Fahrzeugsensordaten beispielsweise Audiodaten eines Mikrofons, Daten von Abstandssensoren und Kameradaten umfassen können. Für die richtige Zuordnung der Fahrzeugsensordaten an das geeignete KI-Programm kann die Rechenplattform 20 ein oder mehrere Einheiten aufweisen, die als Softwaremodule bereitgestellt sein können. Vorzugsweise kann die Rechenplattform 20 eine Datenverwaltungseinheit 28 aufweisen, die Steuern kann, welche virtuelle Maschine 22, 23, 24 auf welche Fahrzeugsensordaten zugreifen darf. Somit können die virtuellen Maschinen 22, 23, 24 und die dazugehörigen KI-Programme nur auf die für sie freigegebenen Sensor- /Busdaten zugreifen, wodurch eine Sicherheit erhöht werden kann. Auch kann beispielsweise die Datenverwaltungseinheit 28 die Daten verwalten, die von den KI-Programmen stammen. Beispielsweise kann die Datenverwaltungseinheit 28 Gewichtungsdaten und/oder Ergebnisdaten von dem KI-Programm der abgegrenzten Laufzeitumgebung der virtuellen Maschine 22 erhalten und entweder einem weiteren KI-Programm, beispielsweise dem KI-Programm in der abgegrenzten Laufzeitumgebung der virtuellen Maschine 23 zur Verfügung stellen, oder die Ergebnisdaten auf den Datenbus 26 zur Ansteuerung einer Fahrzeugfunktion bereitstellen. Vorzugsweise findet die Datenübertragung nicht direkt zwischen dem KI-Programm und dem Datenbus 26 statt, sondern wird durch die Datenverwaltungseinheit 28 überwacht. Somit kann jederzeit sichergestellt werden, dass auch ein KI-Programm von Dritten nicht auf unbefugte Fahrzeugsensordaten zugreifen kann.

Da die KI-Programm der jeweiligen virtuellen Maschinen oftmals gleiche Programmbibliotheken verwenden, kann die Rechenplattform 20 eine Bibliotheksverwaltungseinheit 30 aufweisen, die einen Zugriff auf Programmbibliotheken steuern kann. Beispielsweise können die KI-Programme der virtuellen Maschinen 22 und 23 eine vorgegebene Programmbibliothek benötigen. Damit diese vorgegebene Programmbibliothek nicht in jede der virtuellen Maschinen 22, 23 kopiert werden muss, kann die Bibliotheksverwaltungseinheit 30 dazu ausgebildet sein, eine Verbindung zu einem Speicherplatz außerhalb der jeweilig abgegrenzten Laufzeitumgebung der virtuellen Maschinen herzustellen. Das heißt, dass der Speicherort der vorgegebenen Programmbibliothek in einer Datenstruktur der Recheneinrichtung 18 außerhalb der virtuellen Maschinen 22, 23, 24 vorgesehen ist. Somit kann die Bibliotheksverwaltungseinheit 30 die vorgegebene Programmbibliothek einmalig außerhalb der abgegrenzten Laufzeitumgebungen vorhalten, wodurch Speicherplatz gespart werden kann. Somit kann die vorgegebene Programmbibliothek mittels geteilten Zugriffs zentral bereitgestellt werden kann.

Zusätzlich kann die Rechenplattform 20 eine Problemerkennungseinheit 32 aufweisen, die für die KI-Programme einen so genannten "corner case" Mechanismus zur Verfügung stellen kann. Sollte ein KI-Programm zu dem Entschluss kommen, dass aktuelle Fahrzeugsensordaten nicht richtig eingeordnet werden können, oder das eine aktuelle Situation nicht mit hoher Sicherheit klassifiziert werden kann, so kann die Problemerkennungseinheit 32 die Fahrzeugsensordaten dieser virtuellen Maschine 22, 23, 24 für ein späteres Nachtrainieren in einem Problemdatenspeicher (nicht gezeigt) speichern, der sich vorzugsweise außerhalb der jeweiligen virtuellen Maschine 22, 23, 24 befinden kann. Beispielsweise kann hierfür die Problemerkennungseinheit 32 eine Klassifizierungsbedingung aufweisen, und eine Klassifizierung eines KI-Programms wird daraufhin überprüft, ob bei der Klassifikation diese Klassifizierungsbedingung vorliegt. Ist dies der Fall, können die betreffenden Fahrzeugsensordaten in dem Problemdatenspeicher gespeichert werden. Die Klassifizierungsbedingung kann beispielsweise ein Schwellenwert sein, insbesondere ein Wert, mit welcher Wahrscheinlichkeit die Fahrzeugsensordaten durch das KI-Programm klassifiziert wurden.

Ferner kann die Rechenplattform 20 eine Steuereinheit 34 aufweisen, die beispielsweise dafür ausgebildet sein kann, die virtuellen Maschinen 22, 23, 24 zu erzeugen und Systemressourcen der Recheneinrichtung 18 für die jeweilige virtuelle Maschine 22, 23, 24 bereitzustellen, wobei die Systemressourcen vorzugsweise speziell auf die Anforderungen des jeweiligen KI-Programms zugeschnitten sind. Die Steuereinheit 34 kann beispielsweise auch die virtuellen Maschinen 22, 23, 24 überwachen, um die virtuellen Maschinen 22, 23, 24 gegebenenfalls neu zu starten. Vorzugsweise kann auch eine grafische Nutzerschnittstelle vorgesehen sein, über die die Rechenplattform 20 und die virtuellen Maschinen 22, 23, 24 gesteuert werden können.

Besonders bevorzugt kann die Rechenplattform 20 auch eine Benutzereinheit 36 aufweisen, die nutzerspezifische Daten für die Anwendung der KI-Programme verwalten kann. Beispielsweise können für verschiedene Benutzer, insbesondere des Kraftfahrzeugs 16, unterschiedliche Gewichtungsdaten für die KI-Programme der virtuellen Maschinen 22, 23, 24 vorgesehen sein, die von der Benutzereinheit 36 verwaltet und bei Erkennen des jeweiligen Benutzers geladen werden können.

Zusätzlich kann die Rechenplattform 20 eine Kommunikationseinheit 38 aufweisen, die eine Datenverbindung 40 bereitstellen kann, insbesondere eine Datenverbindung 40 zu dem fahrzeugexternen Server 14. Die Kommunikationseinheit 38 kann beispielsweise dazu ausgebildet sein, eine Aktualisierung des KI-Programms oder ein weiteres KI-Programm für eine der virtuellen Maschinen 22, 23, 24, beispielsweise für die virtuelle Maschine 24, zu erhalten und während einer Laufzeit der Recheneinrichtung 18 einzubinden. Hierzu kann die virtuelle Maschine 24 vorzugsweise hot plug-in-fähig sein. Das bedeutet, dass diese während einer Laufzeit der Recheneinrichtung 18 aktualisiert werden kann, ohne einen Neustart durchführen zu müssen. Hierdurch kann variabel und schnell ein neues KI-Programm eingebunden werden.

Des Weiteren kann die Kommunikationseinheit 38 dazu ausgebildet sein, die Fahrzeugsensordaten aus dem Problemdatenspeicher zu laden, die von der Problemerkennungseinheit 32 als problematisch erkannt wurden, und an den fahrzeugexternen Server 14 zu senden. Vorzugsweise kann der fahrzeugexterne Server 14 eine gespiegelte Rechenplattform 42 aufweisen, die identisch mit der Rechenplattform 20 auf dem Steuergerät 12 sein kann. Auf der gespiegelten Rechenplattform 42 kann beispielsweise ein serverbasiertes KI-Programm innerhalb einer weiteren virtuellen Maschine 44 betrieben werden, die vorzugsweise dazu genutzt werden kann, die Fahrzeugsensordaten aus dem Problemdatenspeicher zu analysieren und das KI-Programm fahrzeugextern anzulernen. Anschließend können die so angelernten Daten der virtuellen Maschine 44 zurück über die Kommunikationseinheit 38 in das KI-Programm der virtuellen Maschine 24 übertragen werden.

Besonders bevorzugt kann die Rechenplattform 20 eine Hardwareabstraktionsschicht 46 aufweisen, die dazu ausgebildet ist, die Rechenplattform 20 an eine Hardware der Recheneinrichtung 18 anzupassen. Das heißt, dass eine Schicht des Betriebssystems der Recheneinrichtung 18 die Hardware der Recheneinrichtung 18 von dem Betriebssystemkern (Kernel) und der übrigen Software, insbesondere den KI-Programmen und den Softwaremodulen der Rechenplattform 20 trennt. Das hat den Vorteil, dass die Rechenplattform variabel auf verschiedene Steuergeräte und/oder fahrzeugexterne Server (Backend) mit unterschiedlichen Betriebssystemen angepasst werden kann.

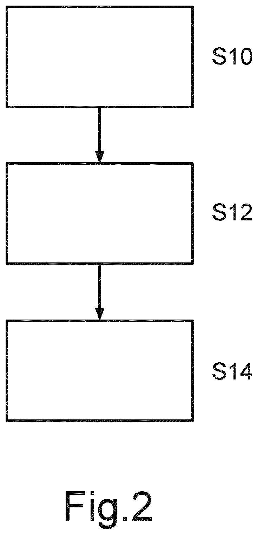

In Fig. 2 ist ein beispielhaftes Ablaufdiagramm für ein Verfahren zum maschinellen Lernen und/oder Klassifizieren mittels eines KI-Programms gezeigt. Das Verfahren umfasst als Schritt S10 ein Bereitstellen einer abgegrenzten Laufzeitumgebung innerhalb einer virtuellen Maschine 22, 23, 24 für zumindest ein Künstliche-Intelligenz-Programm (KI-Programm) durch eine Rechenplattform 20 einer Recheneinrichtung 18, wobei das KI-Programm mittels vorgegebener Fahrzeugsensordaten maschinell angelernt wird und/oder wobei durch das KI-Programm die Fahrzeugsensordaten klassifiziert werden. Als Schritt S12 umfasst das Verfahren ein Bereitstellen zumindest einer vorgegebenen Programmbibliothek für das KI-Programm von außerhalb der abgegrenzten Laufzeitumgebung durch eine Bibliotheksverwaltungseinheit 30 und als ein Schritt S14 umfasst das Verfahren ein Bereitstellen der vorgegebenen Fahrzeugsensordaten durch eine Datenverwaltungseinheit 28 an das KI-Programm zum maschinellen Lernen und/oder Klassifizieren.

In einer anderen beispielhaften Ausführungsform besteht ein Aspekt darin, dass eine machine learning Plattform (Rechenplattform 20) für jeden machine learning Algorithmus (KI-Programm) eine eigene virtuelle Umgebung, das heißt eine virtuelle Maschine 22, 23, 24, zur Verfügung stellt. Bei Bedarf können auch mehrere KI-Programme in derselben virtuellen Maschine integriert sein. Diese virtuelle, abgegrenzte Laufzeitumgebung kann passend auf den jeweiligen machine learning Algorithmus angepasst werden. Es können die benötigten Softwarebibliotheken, das heißt die vorgegebene Programmbibliothek, sowie die von der Datenverwaltungseinheit 28 bereitgestellten Fahrzeugsensordaten bereitgestellt werden. Durch eine Konfiguration der virtuellen Maschinen 22, 23, 24 können die Softwarebibliotheken nur einmal auf dem Steuergerät 12 installiert werden und können anschließend von mehreren machine learning Algorithmen genutzt werden, ohne dass sich diese in derselben virtuellen Maschine befinden. Zusätzlich kann durch diesen Mechanismus sichergestellt werden, dass der machine learning Algorithmus, beziehungsweise die jeweilige virtuelle Maschine 22, 23, 24, nur auf die für sie freigegebenen Fahrzeugsensordaten in ihrer abgegrenzten Laufzeitumgebung zugreifen kann. Darauf erfolgt eine größere Sicherheit bei einer Integration von machine learning Algorithmen Dritter.

In der machine learning Plattform 20 selbst kümmern sich Softwaremodule 28, 30, 32, 34, 36, 38, um die Bereitstellung und Verwaltung der machine learning Algorithmen. Des Weiteren überwacht die Plattform 20 die machine learning Algorithmen. Reagiert ein Algorithmus nicht mehr, so kann er über die Plattform 20 neu gestartet oder komplett abgeschaltet werden. In der Plattform 20 kann sich ein Updatemanager (Kommunikationseinheit 38) befinden, welcher bestehende Module und/oder machine learning Algorithmen austauschen und/oder updaten kann, oder neue Module und/oder maschine learning Algorithmen integrieren kann. Über eine Backend-Anbindung (Datenverbindung 40) können so neue oder neu trainierte Algorithmen komfortabel auf das Steuergerät 12 des Kraftfahrzeugs 16 aufgespielt oder aktualisiert werden.

Die machine learning Plattform 20 kann ebenfalls auf einem Backend (fahrzeugexterner Server 14) installiert werden, um dort die Algorithmen mit neuen Fahrzeugsensordaten /Schwarmdaten anzutrainieren und diese dann anschließend wieder an das Kraftfahrzeug 16 oder weitere Fahrzeuge zu verteilen. Über eine GUI-Oberfläche können neue machine learning Algorithmen komfortabel in die Plattform 20 integriert werden. Des Weiteren können über sie die aktuellen Ausgaben der virtuellen Maschinen 22, 23, 24 angezeigt werden.

Durch die intelligente Plattformarchitektur kann zum Beispiel mit Bezug auf die Bereitstellung von Softwarebibliotheken Speicherplatz gespart und durch die Erstellung von virtuellen Maschinen 22, 23, 24 die Systemsicherheit erhöht werden. Redundante Tätigkeiten können reduziert und Synergien genutzt werden. Durch die Installation der machine learning Plattform 20 im Backend 14 können dort ebenfalls machine learning Algorithmen, zum Beispiel mittels Schwarmdaten, trainiert und anschließend an die machine learning Plattform 20 im Kraftfahrzeug geschickt werden, um dort diese neuen/verbesserten Algorithmen zu integrieren. Somit kann ein für sich geschlossenes Ökosystem erstellt werden. Bei verschiedenen Fahrzeugen oder Vernetzungsarchitekturen kann lediglich die machine learning Plattform 20 selbst variiert werden. Die machine learning Algorithmen können somit immer unverändert genutzt werden.

Vorzugsweise kann die machine learning Plattform 20 auf einem oder mehreren Steuergeräten 12/Backend 14 integriert werden. Die machine learning Algorithmen werden in eigene virtuelle Maschinen 22, 23, 24 integriert. Diese abgegrenzten Laufzeitumgebungen der virtuellen Maschinen 22, 23, 24 können speziell nach den Anforderungen des jeweiligen machine learning Algorithmus während der Laufzeit angepasst werden. In ihnen werden zum Beispiel die aktuellen Gewichte des Algorithmus gespeichert. Die virtuellen Maschinen 22, 23, 24 sind voneinander getrennt. Die machine learning Algorithmen können auf die machine learning Softwarebibliotheken zugreifen ohne diese in die Umgebung kopieren zu müssen. Somit können mehrere machine learning Algorithmen aus getrennten virtuellen Umgebungen auf dieselbe Softwarebibliothek zugreifen. Synergien können somit zwischen den verschiedenen machine learning Algorithmen genutzt werden.

Die Kommunikation zwischen der machine learning Plattform, einem Sensoren-/Bussystemen (Datenbus 26) und den virtuellen Maschinen 22, 23, 24 kann über ein zentrales Datenübertragungsmanagementsystem (Datenverwaltungseinheit 28) erfolgen. Dieses Datenübertragungsmanagementsystem 28 kann in der machine learning Plattform 20 verortet sein und steuern, welcher Teilnehmer auf welche Daten zugreifen darf. Hierdurch können die virtuellen Maschinen 22, 23, 24 und somit letztendlich die machine learning Algorithmen nur auf die für sie freigegebenen Fahrzeugsensordaten/Busdaten zugreifen. Die Ergebnisse der machine learning Algorithmen können ebenfalls auf den Bus gelegt werden um gegebenenfalls als Eingangsdaten für eine Funktion oder einen weiteren machine learning Algorithmus zu dienen. Die machine learning Plattform 20 steuert als zentrale Instanz den Betrieb und die Überwachung der machine learning Algorithmen.

Über die machine learning Plattform 20 werden die Fahrzeugsensordaten/Busdaten eingesammelt und auf das Datenübertragungsmanagementsystem (Datenverwaltungseinheit 28) gelegt. Des Weiteren kann sich die machine learning Plattform 20 um die Verwaltung, zum Beispiel Versionsmanagement, und Bereitstellung von benötigten machine learning Softwarebibliotheken kümmern. Darüber hinaus kann sie für machine learning Algorithmen einen so genannten "corner case" Mechanismus zur Verfügung stellen. Sollte ein Algorithmus zu dem Entschluss kommen, dass er die aktuellen Fahrzeugsensordaten/Busdaten nicht richtig einordnen kann oder die aktuelle Situation nicht mit hoher Sicherheit klassifizieren kann, so kann er über eine Problemerkennungseinheit 32 die Fahrzeugsensordaten für ein späteres Nachtrainieren in einem Problemdatenspeicher speichern. Dabei kann dieses Nachtrainieren des Algorithmus sowohl im Fahrzeug 16 als auch im Backend 14 nach einer vorheriger Übertragung der Fahrzeugsensordaten erfolgen. Der machine learning Algorithmus kann sich somit kontinuierlich verbessern und seine Prädiktionsfähigkeit steigern. Auch ein Entwickler des machine learning Algorithmus kann diese corner case-Daten zur weiteren Entwicklung und Analyse nutzen.

Durch einen plattforminternen Updatemanager (Kommunikationseinheit 38) können die sich im Fahrzeug 16 befindenden Algorithmen über das Backend 14 geupdatet werden oder es können neue machine learning Algorithmen integriert werden. Über ein Usermanagement-Modul (Benutzereinheit 36) können nutzerspezifische Parameter und/oder Daten abgespeichert und mit den virtuellen Maschinen 22, 23, 24 oder dem Backend 14 ausgetauscht werden. Eine in der machine learning Plattform 20 integrierte Abstraktionsschicht (Hardwareabstraktionsschicht 46) ermöglicht einen Einsatz der machine learning Plattform 20 auf verschiedenen Steuergeräten/Backends mit unterschiedlichen Betriebssystemen.

Insgesamt zeigen die Beispiele, wie durch die Erfindung eine machine learning Plattform bereitgestellt werden kann.

## Patentansprüche

1. Steuergerät (12) für ein Fahrzeug (16), mit
- einer Recheneinrichtung (18), die eine Rechenplattform (20) für künstliche Intelligenz aufweist;
- wobei die Rechenplattform (20) dazu ausgebildet ist, eine jeweilige Laufzeitumgebung für zumindest ein Künstliche-Intelligenz-Programm, KI-Programm, bereitzustellen, wobei das KI-Programm dazu ausgebildet ist, vorgegebene Fahrzeugsensordaten zu klassifizieren;
- wobei die Rechenplattform (20) eine Bibliotheksverwaltungseinheit (30) aufweist, wobei die Bibliotheksverwaltungseinheit (30) dazu ausgebildet ist, zumindest eine vorgegebene Programmbibliothek für das KI-Programm bereitzustellen;
wobei
- die Rechenplattform (20) dazu ausgebildet ist, die Laufzeitumgebung als eine abgegrenzte Laufzeitumgebung innerhalb einer virtuellen Maschine (22, 23, 24) zu erzeugen, wobei die vorgegebene Programmbibliothek außerhalb der virtuellen Maschine (22, 23, 24) bereitgestellt ist;
- wobei die Bibliotheksverwaltungseinheit (30) dazu ausgebildet ist, die vorgegebene Programmbibliothek dem KI-Programm in der abgegrenzten Laufzeitumgebung von außerhalb der abgegrenzten Laufzeitumgebung bereitzustellen; und
- wobei die Rechenplattform (20) eine Datenverwaltungseinheit (28) aufweist, die dazu ausgebildet ist, dem KI-Programm in der abgegrenzten Laufzeitumgebung die vorgegebenen Fahrzeugsensordaten zum Klassifizieren bereitzustellen;
- wobei durch die Rechenplattform (20) mehrere abgegrenzte Laufzeitumgebungen mit einem jeweiligen KI-Programm bereitgestellt sind, wobei die Bibliotheksverwaltungseinheit (30) ausgebildet ist, die vorgegebene Programmbibliothek an die mehreren abgegrenzten Laufzeitumgebungen mittels geteilten Zugriff bereitzustellen;
- wobei die Datenverwaltungseinheit (28) ferner dazu ausgebildet ist, Ergebnisdaten der Klassifikation von dem jeweiligen KI-Programm aus der jeweiligen abgegrenzten Laufzeitumgebung zu erhalten und diese zur Ansteuerung einer Fahrzeugfunktion bereitzustellen.

2. Steuergerät (12) nach Anspruch 1, wobei die Rechenplattform (20) einen Hypervisor aufweist und die abgegrenzte Laufzeitumgebung virtualisiert innerhalb der Recheneinrichtung als virtuelle Maschine (22, 23, 24) nur indirekt über den Hypervisor der Rechenplattform (20) mit einer Hardwareumgebung (26) der Recheneinrichtung (18) gekoppelt ist.

3. Steuergerät (12) nach einem der vorhergehenden Ansprüche, wobei die Datenverwaltungseinheit (28) ferner dazu ausgebildet ist, Ergebnisdaten der Klassifikation von dem jeweiligen KI-Programm aus der jeweiligen abgegrenzten Laufzeitumgebung zu erhalten und diese einem weiteren KI-Programm in einer weiteren abgegrenzten Laufzeitumgebung bereitzustellen.

4. Steuergerät (12) nach einem der vorhergehenden Ansprüche, wobei die Rechenplattform (20) eine Hardwareabstraktionsschicht (46) aufweist, die dazu ausgebildet ist, die Rechenplattform (20) an eine Hardware der Recheneinrichtung (18) des Steuergeräts (12) anzupassen.

5. Steuergerät (12) nach einem der vorhergehenden Ansprüche, wobei die Rechenplattform (20) eine Problemerkennungseinheit (32) aufweist, die dazu ausgebildet ist, die Klassifizierung der Fahrzeugsensordaten durch das KI-Programm auf Vorliegen einer vorgegebenen Klassifizierungsbedingung zu überprüfen und die Fahrzeugsensordaten, für die die Klassifizierungsbedingung vorliegt, in einem Problemdatenspeicher zu speichern, wobei die Klassifizierungsbedingung eine Güte der Erkennung durch das KI-Programm angibt.

6. Steuergerät (12) nach einem der vorhergehenden Ansprüche, wobei die Rechenplattform (20) eine Kommunikationseinheit (38) aufweist, die dazu ausgebildet ist, eine Aktualisierung des KI-Programms und/oder ein weiteres KI-Programm, insbesondere von einem fahrzeugexternen Server (14), zu empfangen, und während einer Laufzeit der Recheneinrichtung (18) und/oder der abgegrenzten Laufzeitumgebung einzubinden.

7. System (10) mit einem Steuergerät (12) nach einem der vorhergehenden Ansprüche und mit einem fahrzeugexternen Server (14), wobei der fahrzeugexterne Server (14) eine gespiegelte Rechenplattform aufweist, die dazu ausgebildet ist, die Fahrzeugsensordaten aus einem Problemdatenspeicher der Recheneinrichtung (18) des Steuergeräts (12) zu empfangen und das KI-Programm mittels eines serverbasierten KI-Programms (44) gemäß einem überwachten maschinellen Lernen nachzutrainieren und Gewichtungsdaten des Nachtrainierens als Aktualisierung der Recheneinrichtung (18) des Steuergeräts (12) bereitzustellen.

8. Kraftfahrzeug (16) mit einem Steuergerät (12) nach einem der Ansprüche 1 bis 6.

## Claims

1. Control device (12) for a vehicle (16), having
- a computing apparatus (18) which has a computing platform (20) for artificial intelligence;
- wherein the computing platform (20) is designed to provide a respective runtime environment for at least one artificial intelligence program, AI program, wherein the AI program is designed to classify predefined vehicle sensor data;
- wherein the computing platform (20) has a library management unit (30), wherein the library management unit (30) is designed to provide at least one predefined program library for the AI program;
- wherein the computing platform (20) is designed to generate the runtime environment as a delimited runtime environment within a virtual machine (22, 23, 24), wherein the predefined program library is provided outside the virtual machine (22, 23, 24);
- wherein the library management unit (30) is designed to provide the predefined program library to the AI program in the delimited runtime environment from outside the delimited runtime environment; and
- wherein the computing platform (20) has a data management unit (28) designed to provide the predefined vehicle sensor data to the AI program in the delimited runtime environment for classification;
- wherein the computing platform (20) provides a plurality of predefined runtime environments having a respective AI program, wherein the library management unit (30) is designed to provide the predefined program library to the plurality of predefined runtime environments by means of shared access;
- wherein the data management unit (28) is further designed to receive result data relating to the classification of the respective AI program from the respective delimited runtime environment and to provide said data so as to control a vehicle function.

2. Control device (12) according to claim 1, wherein the computing platform (20) has a hypervisor and the delimited runtime environment is virtualised within the computing apparatus as a virtual machine (22, 23, 24) coupled only indirectly by means of the hypervisor of the computing platform (20) to a hardware environment (26) of the computing apparatus (18).

3. Control device (12) according to any one of the preceding claims, wherein the data management unit (28) is further designed to receive result data relating to the classification of the respective AI program from the respective delimited runtime environment and to provide said data to a further AI program in a further delimited runtime environment.

4. Control device (12) according to any one of the preceding claims, wherein the computing platform (20) has a hardware abstraction layer (46) which is designed to adapt the computing platform (20) to hardware of the computing apparatus (18) of the control device (12).

5. Control device (12) according to any one of the preceding claims, wherein the computing platform (20) has a problem detection unit (32) which is designed to check the classification of the vehicle sensor data by the AI program to determine whether a predefined classification condition is present and to store the vehicle sensor data for which the classification condition is present in a problem data memory, wherein the classification condition indicates a quality of the detection by the AI program.

6. Control device (12) according to any one of the preceding claims, wherein the computing platform (20) has a communication unit (38) which is designed to receive an update to the AI program and/or a further AI program, in particular from a server (14) external to the vehicle, and to integrate said update and/or said further AI program during a runtime of the computing apparatus (18) and/or the delimited runtime environment.

7. System (10) having a control device (12) according to any one of the preceding claims and having a server (14) external to the vehicle, wherein the server (14) external to the vehicle has a mirrored computing platform designed to receive the vehicle sensor data from a problem data memory of the computing apparatus (18) of the control device (12) and to post-train the AI program by means of a server-based AI program (44) according to a supervised machine learning process and to provide weighting data on the post-training as an update to the computing apparatus (18) of the control device (12).

8. Motor vehicle (16) having a control device (12) according to any one of claims 1 to 6.

## Revendications

1. Dispositif de commande (12) pour un véhicule (16), avec
- un dispositif de calcul (18) qui présente une plateforme de calcul (20) pour une intelligence artificielle ;
- dans lequel la plateforme de calcul (20) est réalisée afin de fournir un environnement d'exécution respectif pour au moins un programme d'intelligence artificielle, programme IA, dans lequel le programme IA est réalisé afin de classifier des données de capteur de véhicule prédéfinies ;
- dans lequel la plateforme de calcul (20) présente une unité de gestion de bibliothèque (30), dans lequel l'unité de gestion de bibliothèque (30) est réalisée afin de fournir au moins une bibliothèque de programmes prédéfinie pour le programme IA ;
dans lequel
- la plateforme de calcul (20) est réalisée afin de générer l'environnement d'exécution comme un environnement d'exécution limité dans une machine virtuelle (22, 23, 24), dans lequel la bibliothèque de programmes prédéfinie est fournie en dehors de la machine virtuelle (22, 23, 24) ;
- dans lequel l'unité de gestion de bibliothèque (30) est réalisée afin de fournir la bibliothèque de programmes prédéfinie au programme IA dans l'environnement d'exécution limité depuis l'extérieur de l'environnement d'exécution limité ; et
- dans lequel la plateforme de calcul (20) présente une unité de gestion de données (28) qui est réalisée afin de fournir au programme IA dans l'environnement d'exécution limité les données de capteur de véhicule prédéfinies pour la classification ;
- dans lequel plusieurs environnements d'exécution limités avec un programme IA respectif sont fournis par la plateforme de calcul (20), dans lequel l'unité de gestion de bibliothèque (30) est réalisée afin de fournir la bibliothèque de programmes prédéfinie aux plusieurs environnements d'exécution limités au moyen de l'accès partagé ;
- dans lequel l'unité de gestion de données (28) est de plus réalisée afin de recevoir des données de résultat de la classification par le programme IA respectif depuis l'environnement d'exécution limité respectif et de fournir celles-ci pour la commande d'une fonction de véhicule.

2. Dispositif de commande (12) selon la revendication 1, dans lequel la plateforme de calcul (20) présente un hyperviseur et l'environnement d'exécution limité est couplé de manière virtualisée dans le dispositif de calcul comme machine virtuelle (22, 23, 24) seulement indirectement par le biais de l'hyperviseur de la plateforme de calcul (20) à un environnement matériel (26) du dispositif de calcul (18).

3. Dispositif de commande (12) selon l'une quelconque des revendications précédentes, dans lequel l'unité de gestion de données (28) est de plus réalisée afin de recevoir des données de résultat de la classification par le programme IA respectif depuis l'environnement d'exécution limité respectif et de fournir celles-ci à un autre programme IA dans un autre environnement d'exécution limité.

4. Dispositif de commande (12) selon l'une quelconque des revendications précédentes, dans lequel la plateforme de calcul (20) présente une couche d'abstraction matérielle (46) qui est réalisée afin d'adapter la plateforme de calcul (20) à un matériel du dispositif de calcul (18) du dispositif de commande (12).

5. Dispositif de commande (12) selon l'une quelconque des revendications précédentes, dans lequel la plateforme de calcul (20) présente une unité de reconnaissance de problèmes (32) qui est réalisée afin de vérifier la classification des données de capteur de véhicule par le programme IA quant à la présence d'une condition de classification prédéfinie et d'enregistrer les données de capteur de véhicule, pour lesquelles se présente la condition de classification, dans une mémoire de données de problèmes, dans lequel la condition de classification indique une qualité de la reconnaissance par le programme IA.

6. Dispositif de commande (12) selon l'une quelconque des revendications précédentes, dans lequel la plateforme de calcul (20) présente une unité de communication (38) qui est réalisée afin de recevoir une actualisation du programme IA et/ou un autre programme IA, en particulier par un serveur (14) externe au véhicule, et de l'intégrer pendant une exécution du dispositif de calcul (18) et/ou de l'environnement d'exécution limité.

7. Système (10) avec un dispositif de commande (12) selon l'une quelconque des revendications précédentes et avec un serveur (14) externe au véhicule, dans lequel le serveur (14) externe au véhicule présente une plateforme de calcul réfléchie qui est réalisée afin de recevoir les données de capteur de véhicule d'une mémoire de données de problèmes du dispositif de calcul (18) du dispositif de commande (12) et d'exercer ultérieurement le programme IA au moyen d'un programme IA (44) basé sur serveur selon un apprentissage machine surveillé et de fournir des données de pondération de l'exercice ultérieur comme actualisation du dispositif de calcul (18) du dispositif de commande (12).

8. Véhicule automobile (16) avec un dispositif de commande (12) selon l'une quelconque des revendications 1 à 6.
